# EUROPÄISCHE PATENTANMELDUNG

(11) **EP 0 572 856 A1**
(43) Veröffentlichungstag der Anmeldung: **08.12.1993**
(21) Anmeldenummer: 93108049.3
(22) Anmeldetag: 18.05.1993
(51) Int. Cl.: H01S 3/0975, H03L 5/02

(54) **Regelung für einen im Pulsfolgebetrieb betreibbaren Hochfrequenzgenerator, insbesondere zur Anregung eines Lasers**

(30) Priorität: 01.06.1992 DE 4218017
(71) Anmelder: SIEMENS AKTIENGESELLSCHAFT, D-80333 München (DE)
(72) Erfinder: Hochgraeber, Hermann, W-8031 Seefeld 2 (DE); Hemmer, Bernhard, Dipl.-Ing., W-8604 Schesslitz (DE)

(57) **Zusammenfassung**

Die Erfindung betrifft die Regelung der Ausgangsleistung eines Hochfrequenzgenerators (1) für die Speisung eines gepulsten Lasers (6). Während des Pulsens wird die Leistung mittels eines steuerbaren Gitterableitwiderstandes (15) im Gitterkreis der Röhre des HF-Generators (1) geregelt. In den Pulspausen wird der Regelung eine Ersatztriode (13) vorgegeben und damit Einschwingvorgänge minimiert.

## Beschreibung

Die Erfindung bezieht sich auf eine Regelung für einen im Pulsfolgebetrieb betreibbaren Hochfrequenzgenerator, insbesondere zur Anregung eines Lasers.

Beim hochfrequent angeregten Betrieb von CO₂-Lasern wurde festgestellt, daß die Impedanz des Lasers im gepulsten Betrieb nicht konstant ist. Um sicherzustellen, daß der Laser während eines Hochfrequenzpulses eine konstante Leistung aufnimmt, ist eine Leistungsregelung für den Hochfrequenzgenerator vorzusehen, die die Ausgangsleistung so steuert, daß z.B. die Differenz der Leistungen der zum Laser hinlaufenden Welle und der von ihm reflektierten Welle konstant ist.

Die Aufgabe der vorliegenden Erfindung besteht darin, eine schnelle und hochgenaue Regelung der Ausgangsleistung eines Hochfrequenzgenerators im gepulsten Betrieb zu schaffen.

Diese Aufgabe wird durch folgende Regelung gelöst:
a) einem Leistungsregler, dem während der Pulsdauer ein dem Istwert der Ausgangsleistung des Hochfrequenzgenerators proportionales Signal und ein dem geforderten Sollwert proportionales Signal vorgebbar sind und dessen Ausgangssignal das Stellglied des Hochfrequenzgenerators ansteuert,
b) einen dem Leistungsregler zugeordneten Speicher, in dem das aktuelle Ausgangssignal des Leistungsreglers am Ende der Pulsdauer übernehmbar ist und
c) einer Ersatzstrecke für Stellglied und Hochfrequenzgenerator, die während der Pulspause durch die Differenz zwischen dem gespeicherten Signal (Sollwert) und dem Leistungsreglerausgangssignal (Istwert) aussteuerbar ist und deren Ausgangssignal als Istwert in den Pulspausen dem Leistungsregler aufschaltbar ist.

Das Besondere an dieser Regelung ist, daß auch im gepulsten Betrieb eine Analogregelung realisiert ist, da durch Einfrieren des Reglers die Pulspausen überbrückt werden. Diese Vorgehensweise ermöglicht eine geregelte Ausgangsleistung des Hochfrequenzgenerators, die unabhängig von der Frequenz und dem Tastgrad des angelegten externen Impulsfolgesignals ist.

Im Vergleich zum Pulsen durch Sollwertabschaltung hat diese Art der Steuerung den Vorteil, daß die Einschwingvorgänge zu Beginn des nächsten Pulses minimiert werden.

Anhand eines in der Zeichnung dargestellten Ausführungsbeispiels sei die Erfindung näher erläutert; es zeigen:
Fig. 1 das Prinzipschaltbild der Gesamtanordnung,
Fig. 2 das Prinzip der Regelanordnung,
Fig. 3 die Schaltung der Ersatzstrecke,
Fig. 4 den Aufbau des Stellgliedes und
Fig. 5 eine Prinzipschaltung für die Leistungsmessung.

Es soll gesichert sein, daß ein Laser 6 während eines Hochfrequenzpulses eine konstante Hochfrequenzleistung vom Hochfrequenzgenerator 1 aufnimmt. Hierzu muß die Ausgangsleistung des Generators so gesteuert werden, daß die Differenz der Leistungen der zum Laser 6 hinlaufenden Welle und der von ihm reflektierten Welle konstant ist.

Die beiden Leistungsmesser 3 und 4 haben die Aufgabe, die Leistung der vorlaufenden bzw. der reflektierten Welle auf der Speiseleitung zwischen Hochfrequenzgenerator 1 und Laser 6 mit seinem Anpassungsnetzwerk 5 zu messen. Sie erhalten die zu messenden Spannungen aus einem Richtkoppler 2. Die Ausgangsspannungen der beiden Leistungsmesser 3 und 4 sollen leistungsproportional sein, damit aus ihnen in einem Differenzglied 7 die dem Laser 6 zugeführte Leistung als Spannung U2 gewonnen werden kann. Die Regelanordnung erzeugt hieraus und aus dem Sollwert U3 eine Steuerspannung U1 für das Stellglied 9. Das Stellglied 9 steuert die Ausgangsleistung des Hochfrequenzgenerators 1 so, daß die gemessene Leistungsdifferenz und damit die dem Laser 6 zugeführte Leistung konstant gehalten wird. Anstelle der Differenz der Wellen kann auch ein anderer für die Leistung repräsentativer Wert benutzt werden, z.B. nur die hinlaufende Welle oder die Laserleistung.

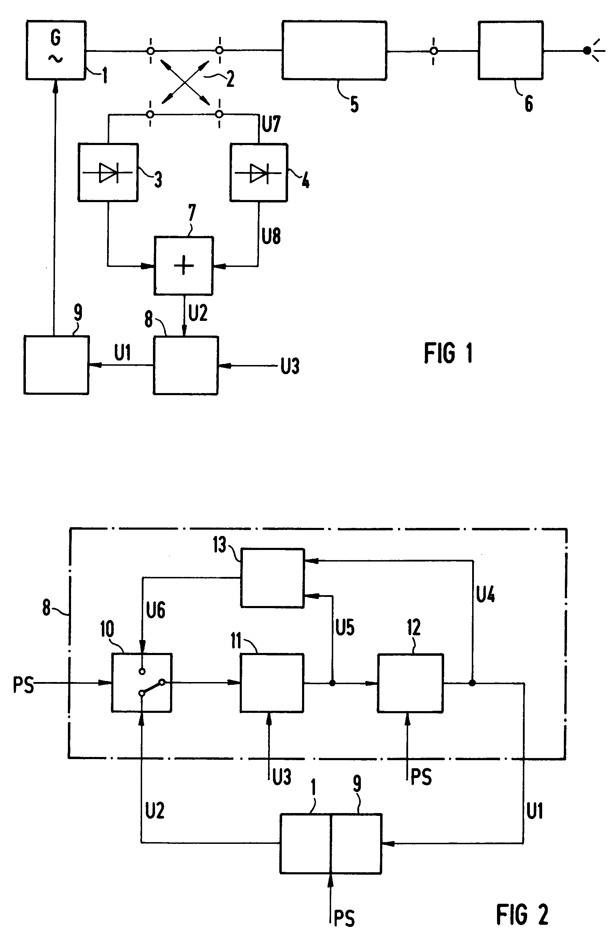

Fig. 2 zeigt nähere Einzelheiten der Regelanordnung 8. Wie ersichtlich, wird am Ausgang der zu regelnden Strecke, bestehend aus Stellglied 9 und Hochfrequenzgenerator 1 mit Last die Ausgangsleistung des Hochfrequenzgenerators 1 erfaßt und der Regelanordnung 8 zugeführt, und zwar als Leistungsistwert U2 über einen Analogumschalter 10 einem Leistungsregler 11. Diesem als PI-Regler ausgeführten Leistungsregler 11 wird auch der gewünschte Leistungssollwert U3 vorgegeben. Aus der Differenz von Soll- und Istwerten erzeugt der Leistungsregler 11 ein Ansteuersignal U1 für das Stellglied 9, welches dafür sorgt, daß während der Pulsdauer die Ausgangsleistung des Hochfrequenzgenerators 1 auf dem gewünschten Wert gehalten wird.

Der Hochfrequenzgenerator 1 kann dabei z.B. ein selbstschwingender Röhrenoszillator mit Triode sein, dessen Ausgangsleistung über ein Gitterstellglied regelbar ist. Seine Betriebsfrequenz kann beispielsweise 80 Megahertz betragen, während die Pulsfolgefrequenz bei z.B. 30 Kilohertz liegen kann.

Das Besondere an der Regelanordnung 8 ist, daß der für die Regelung verwendete PI-Regler 11 in den Pulspausen des Hochfrequenzgenerators 1 eingefroren wird. Hierzu ist ein dem Leistungsregler 11 zugeordnetes Abtasthalteglied 12 vorgesehen, das als Speicher für das Ausgangssignal des Leistungsreglers 11 am Ende der Pulsdauer dient. Dieses Abtasthalteglied 12 wird durch ein Pulsfolgesignal PS aktiviert.

Dem Leistungsregler 11 wird am Ende der Pulsdauer eine Ersatzstrecke 13 mittels des Schnellanalogumschalters 10 aufgeschaltet. Der Sollwert U4 am Eingang der Ersatzstrecke 13 wird dabei durch das im Abtasthalteglied 12 vorhandene Signal U4, das dem Reglerausgangssignal am Ende der Regelzeit der Strecke 1, 9 entspricht, vorgegeben und mit dem Istwert U5, d.h. dem aktuellen Ausgangssignal des Leistungsreglers 11 verglichen. Hierdurch wird über die Ersatzstrecke 13 der Leistungsregler 11 mit dem Signal U6 in den Zustand gebracht bzw. gehalten, den er am Ende der Regelzeit eingenommen hat.

Im Vergleich zum Pulsen durch Sollwertabschaltung, d.h. durch Wegfall des Sollwertes U3, hat diese Art der Regelsteuerung den Vorteil, daß Einschwingvorgänge zum Beginn des nächsten Pulses minimiert werden.

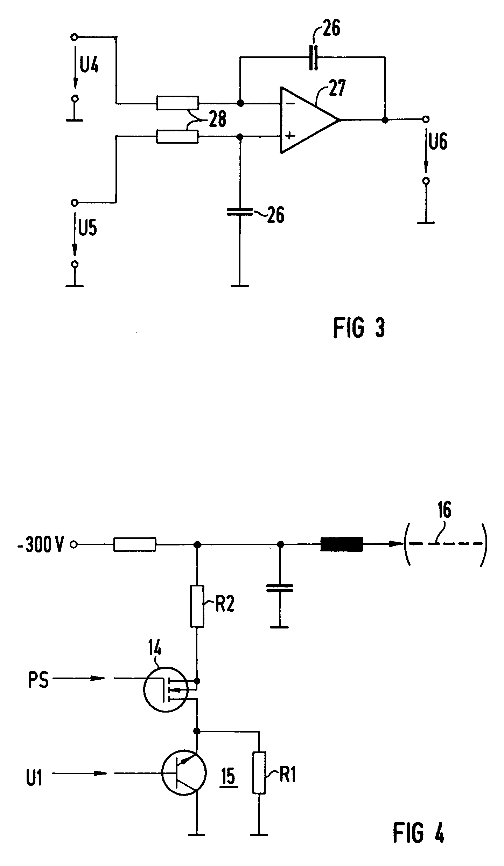

Wie Fig. 3 erkennen läßt, besteht die Ersatzstrecke 13 aus einem Differenzintegrator, d.h. aus einem mit Kondensatoren 26 und Eingangswiderständen 28 beschalteten Operationsverstärker 27.

Die vorstehend erläuterte Regelanordnung ist sehr gut bei Strecken verwendbar, bei denen das Gitterstellglied für die Röhre des Hochfrequenzgenerators aus zwei Teilen besteht, und zwar einem schnellen Schalter für die Abschaltung der Hochfrequenzleistung und einem analogen Steller für die Ausgangsleistung des Hochfrequenzgenerators 1.

Wie aus Fig. 4 ersichtlich, besteht das Gitterstellglied für die nichtgezeigte Röhre aus zwei in Reihe geschalteten Teilen. Der erste Teil 14 stellt den digital ansteuerbaren Schalter dar, mit dem der Hochfrequenzgenerator 1 einbzw. ausgeschaltet werden kann. Der zweite Teil 15 wirkt als ein durch Spannung steuerbarer Gitterableitwiderstand 15, mit dem die Leistung des Hochfrequenzgenerators 1 genau geregelt werden kann.

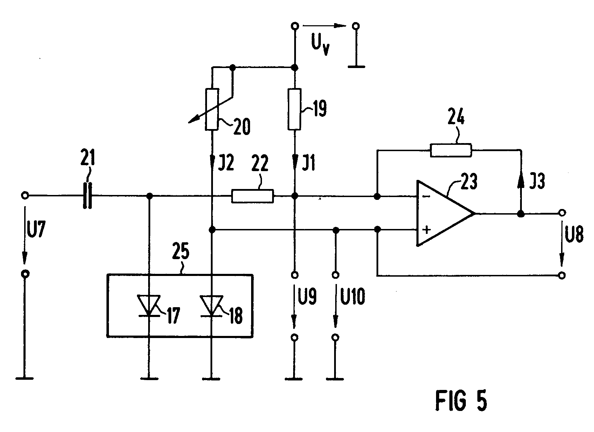

Der digitale Schalter läßt sich durch einen MOS-Transistor realisieren. Dieser Transistor kann mit Hilfe eines Treiberbausteines innerhalb weniger Nanosekunden aus einem extrem hochohmigen in einen extrem niederohmigen Zustand versetzt werden. Ist der Transistor hochohmig, so liegt am Gitter 16 der nichtgezeigten Röhre (Triode) eine extern angelegte Gittersperrspannung an, so daß der Anodenstrom zu Null wird und die Oszillatorschwingung abreißt. Ist der MOS-Transistor des Schalters 14 leitend, so wird der Gitterableitwiderstand 15 bestehend aus einem Iransistor und den Widerständen R1 und R2 wirksam. Der Röhrenoszillator beginnt dann zu schwingen. Durch das Signal U1 kann die Amplitude und damit die Leistung des Hochfrequenzgenerators eingestellt werden. Die beiden Transistoren können auch zusammengefaßt sein. Durch das Gitterstellglied ist auch im kontinuierlichen Betrieb des Lasers bzw. HF-Generators eine Leistungsregelung möglich. Die Schaltung nach Fig. 5 zeigt einen der Leistungsmesser 4 nach Fig. 1. Er dient zur Umwandlung der durch Hochfrequenzeinwirkung entstehenden leistungsproportionalen Richtspannung U7 (Richtstrom) in eine leistungsproportionale Spannung U8.

Zur Richtstromabbildung wird eine Doppeldiode verwendet, bei der beide Dioden 17 und 18 temperaturmäßig eng gekoppelt im gleichen Gehäuse 25 untergebracht sind. Die Diode 17 ist die Detektordiode, wohingegen die Diode 18 als Referenzdiode verwendet wird. Die Diode 17 wird über einen Koppelkondensator 21 mit der Hochfrequenzspannung U7 beaufschlagt. Sie erhält ihren Vorstrom I1 aus der Spannung Uᵥ über den Widerstand 19 und über die Drossel 22. Die Drossel 22 verhindert ein Abfließen der Hochfrequenz. Die Diode 18 erhält ihren Vorstrom I2 über den Widerstand 20. Der Widerstand 20 wird so eingestellt, daß ohne eine Hochfrequenzaussteuerung der Diode 17 die Ausgangsspannung U8 am Ausgang des Operationsverstärkers 23 zu Null wird. Damit wird auch der Rückkopplungsstrom I3 durch den Widerstand 24 zu Null. Der über den Widerstand 24 gegengekoppelte Operationsverstärker 23 bewirkt dabei, daß die Vorspannung der beiden Dioden 17 und 18, d.h. die Spannungen U9 und U10 immer gleich bleiben, auch wenn die Diode 17 mit einem hochfrequenten Wechselsignal ausgesteuert wird. Diese Art der Beschaltung hat drei besondere Vorteile:
1. Die für solche Detektoren typische Arbeitspunktverschiebung an der Diode 17 und somit einer Empfindlichkeitsveränderung bei Aussteuerung der Diode 17 durch ein hochfrequentes Wechselsingal wird verhindert.
2. Der leistungsproportionale Richtstrom bildet sich exakt im Strom des Gegenkopplungswiderstandes ab. Die Spannung U8, d.h. die Spannung am Widerstand 24 ist damit direkt proportional zur Leistung des über den Kondensator 21 eingekoppelten Hochfrequenzsignals.
3. Die hochfrequenzseitige Eingangsimpedanz der Anordnung bleibt aussteuerungsunabhängig.
Die geschilderte HF-Anordnung ist auch zur Speisung anderer Verbraucher, z.B. Plasmaerzeugern oder Heizgeräten, verwendbar.

## Patentansprüche

1. Regelung für einen kontinuierlichen und im Pulsfolgebetrieb betreibbaren Hochfrequenzgenerator, insbesondere zur Anregung eines Lasers mit
a) einem Leistungsregler (11), dem während der Pulsdauer ein für den Istwert (U2) der Ausgangsleistung des Hochfrequenzgenerators (1) repräsentatives Signal und ein dem geforderten Sollwert (U3) proportionales Signal vorgebbar sind und dessen Ausgangssignal (U1) das Stellglied (9) des Hochfrequenzgenerators (1) ansteuert,
b) einer Ersatzstrecke (13) für Stellglied (9) und Hochfrequenzgenerator (1), deren Ausgangssignal (U6) als Istwert in den Pulspausen dem Leistungsregler (11) aufschaltbar ist (Fig. 2).

2. Regelung nach Anspruch 1, mit
a) einem dem Leistungsregler (11) zugeordneten Speicher (12), in dem das Ausgangssignal (U4) des Leistungsreglers (11) am Ende der Pulsdauer übernehmbar ist und
b) einer Ersatzstrecke, die während der Pulspause zwischen dem gespeicherten Signal (U4) und dem Leistungsreglerausgangssignal (U5) aussteuerbar ist.

3. Regelung nach Anspruch 1 oder 2 mit einem Differenzintegrator als Ersatzstrecke (13) (Fig. 3).

4. Regelung nach Anspruch 1, bei dem ein schneller Analogumschalter (10) zum Umschalten zwischen zu regelnder Strecke (1, 9) und Ersatzstrecke vorgesehen ist.

5. Regelung, insbesondere nach Anspruch 1, bei der ein Gitterstellglied für die Röhre des Hochfrequenzgenerators (1) aus der Reihenschaltung eines digital ansteuerbaren Schalters (14) und eines durch eine Steuerspannung (U1) steuerbaren Gitterableitwiderstandes (15) gebildet ist (Fig. 4).

6. Regelung nach Anspruch 1, bei der zur Leistungsmessung vorspannungskompensierte Doppeldioden (17, 18) vorgesehen sind (Fig. 5).

7. Regelung nach Anspruch 5, bei der der steuerbare Gitterableitwiderstand aus der Parallelschaltung mindestens eines steuerbaren Transistors und eines Widerstandes besteht.

8. Regelung nach Anspruch 5, bei der digital ansteuerbarer Schalter und steuerbarer Transistor elektrisch zusammengefaßt sind.
